# EUROPEAN PATENT SPECIFICATION

(11) **EP 2 565 617 B1**
(45) Date of publication and mention of the grant of the patent: **28.11.2018**
(21) Application number: 11179512.6
(22) Date of filing: 31.08.2011
(51) Int. Cl.: B01L 9/00, G01N 1/28

(54) **A smear preparation device**
Schmiermittelherstellungsvorrichtung
Dispositif de préparation de frottis

(43) Date of publication of application: 06.03.2013
(73) Proprietor: SYSMEX CORPORATION, Kobe-shi, Hyogo 651-0073 (JP)
(72) Inventor: Schmidt, Carola, 22848 Norderstedt (DE); Neubacher, Björn, 22848 Norderstedt (DE); Jansen, Henricus, 22848 Norderstedt (DE)
(74) Representative: Hoffmann Eitle

(56) References cited:
- EP-A2- 0 107 372
- DE-C- 439 124
- US-A- 2 746 075
- US-A- 4 392 450
- US-A- 4 516 522
- US-A1- 2002 132 222

## Description

### FIELD OF THE INVENTION

The present invention relates to a smear preparation device. In particular, the present invention relates to a semiautomatic smear preparation device.

### BACKGROUND OF THE INVENTION

Smear preparation devices are known. In particular, smear preparation devices are known in which a spreader blade is moved by an operator, for example, from EP 0 047 189, US 4,516,522, NL 8503194 and US 6,083,759.

A smear preparation device having a spreader 10 is shown in EP 0 047 189. The spreader 10 has two handles 32 which project upwards on both sides of the spreader 10. An operator of the smear preparation device grips the two handles 32 and moves the spreader 10.

However, when the operator moves the spreader 10, there is a risk that operator's fingers may slip from the handles 32 and touch blood on a slide glass. Similarly, in the devices described in US 4,516,522, NL 8503194 and US 6,083,759, the same risk exists as the device shown in EP 0 047 189.

This invention provides a smear preparation device that addresses, amongst other things, this problem.

Further, small laboratories do have a certain volume of smears per day, but not a high enough volume to warrant investment into a large smear maker stainer. Therefore, a smear preparation device is sought for relatively low volumes.

The present invention provides a solution to users having a relatively low smear rate for different bodily fluids in a standardised way.

Currently, the smears are prepared manually or with a conventional device, such as the HemaPrep® manufactured by J.P. Gilbert Co. Boyertown, PA, USA. With such devices, the blood volume is not defined and the process of preparing the smear is highly dependent on the individual user and his experiences to smear preparation. Thus, it is difficult to prepare smears in a standardised way.

For blood smears, the company Alpha-scientific Cop. (http://www.alpha-scientific.com/) offer a single use article which cap pierces an EDTA tube to obtain a defined volume of a single blood drop out without opening the EDTA tube itself. Whilst this single use article offers the possibility to provide a defined volume of blood for the smear preparation and reduce the infection risk for the user, the problem remains of providing a standardised smear from the blood drop.

The HemaPrep® suffers from the disadvantage that the system is not easy to clean and cannot be easily disinfected which is undesirable due to the intended use with human and veterinary samples which can be highly infectious.

The present invention addresses the problems identified above. The smear preparation device according to the present invention provides a device which provides smear quality even for users having a low smear rate per day, as well as for laboratories which offer digital morphology technology to hospital wards but are not able to provide smears with a certain quality, in particular, with a consistent, predictable quality.

US 4 392 450 A is concerned with a device for spreading monolayered films.

### SUMMARY OF THE INVENTION

According to a first aspect of the present invention, there is provided a smear preparation device according to claim 1.

In this way, the handling is improved and the risk that a user touches the sample is reduced, which thus also improves the overall consistency of smear prepared using the smear preparation device.

The dependent claims define further embodiments of the invention.

The smear preparation device comprises a first guide rail 30 disposed on at least one of the lower unit 2 and the upper unit 4 and at least one first engaging means 52 disposed on the other of the at least one of the lower unit 2 and the upper unit 4, wherein the first guide rail 30 is engagable with the first engaging means 52 so that the speed with which the lower unit 2 and the upper unit 4 are movable with respect to one another is controlled. The smear preparation device further comprises a second guide rail 32 disposed on at least one of the lower unit 2 and the unit 4 and at least one second engaging means 50 disposed on the other of the at least one of the lower unit 2 and the upper unit 4, wherein the second guide rail 32 is engagable with the second engaging means 50 to allow the upper unit 4 to be removably connected to the lower unit 2.

In this way, the control of the smear preparation device is improved, so that the consistency of the smears prepared using the device is improved. In particular, the control of the speed with which the upper and lower units move with respect to one another is improved.

At least one of the first guide rail 30 and the second guide rail 32 is disposed on the upper unit 4 and at least one of the first engaging means 52 and the second engaging means 50 is disposed on the lower unit (4), respectively.

The first and second engaging portions 52, 50 comprise one or more spring portions 52, 50 which are arranged to engage with at least one of the first and second guide rail 30, 32, respectively.

The first and second engaging portions 52, 50, in an engaged state exert a force on the first and second guide rails 30, 32, respectively.

The first engaging portion 52 is adjustable to adjust the force exerted on the first guide rail 30 to control the speed with which the lower unit 2 and the upper unit 4 are movable with respect to one another.

The upper unit 4 and the lower unit 2 are pivotable with respect to one another to an open position in which a slide 6 can be disposed and removed from the lower unit 2.

The upper unit 4 and lower unit 2 are pivotable with respect to one another to a closed position in which the smear can be prepared by moving the spreader blade 18 with respect to the slide disposed on the lower unit 2.

The lower unit 2 comprises a marked area 62, 64 giving an indication to the user of where the sample is to be disposed 62 and the volume of the sample to be disposed 64, wherein the marked area 62, 64 is visible to the user through the slide 6 when the slide 6 is disposed on the lower unit 2.

The smear preparation device further comprises a spreader blade 18.

The spring portions 52, 50 comprise at least one clip pin, the clip pin comprising a spring and a cap.

The force exerted by the one or more spring portions 52, 50 is adjusted by depressing the spring portion 52, 50 into the lower unit 2 or upper unit 4, respectively.

In the first engaging portion 52, the cap is arranged to extend and retract with respect to the spring to vary the extent to which the spring portion 52 extends into the first guide rail 30, so that the speed with which the upper unit 4 moves with respect to the lower unit 2 is controlled.

The second engaging portion 50, the cap is arranged to extend and retract with respect to the spring to vary the extent to which the spring portion 50 extends into the second guide rail 32, so that the force required to interconnect the lower unit 2 with respect to the upper unit 4 is controlled.

When the cap is extended on the spring, it extends into the first guide rail 30 to cause a decrease in the relative speed with which the upper unit 4 moves with respect to the lower unit 2.

When the cap is retracted on the spring, the spring portion extends to a lesser degree into the first guide rail (30) to increase the relative speed with which the upper unit (4) moves with respect to the lower unit (2).

The upper unit 4 and lower unit 2 are pivotally mounted with respect to one another.

The upper unit 4 pivots with respect to lower unit 2 around an axis defined by the locations of the engagement of the at least one second engaging portion 50 with the at least one second guide rail 32.

The force with which the upper unit 4 is held in its pivotable mounted position with respect to the lower unit 2 is determined by the force exerted by the second engaging portion 50 in the second guide rail 32.

The at least one of the first and second engaging portions is disposed in the lower unit 2, and wherein the lower unit 2 comprises a body portion into which the at least one of the first and second engaging portions 52, 50 extends and exerts a force outwards from the first and second sides 22, 24 of the lower unit 2.

In the open position, the upper unit 4 and the lower unit 2 are substantially perpendicular with respect to one another, in particular, are at an angle of 92° with respect to one another.

In an engaging position in which the upper unit 4 is engagable with the lower unit 2 by virtue of the second engaging means 50 and the second guide rail 32, the upper unit 4 is at an angle with respect to the lower unit 2 of approximately 45°, in particular, 42°.

The smear preparation device further comprises position maintaining portions 42, 44 disposed on an underside of the lower unit 2, to maintain the position of the lower unit 2 with respect to an object on which it is disposed during a smear preparing process.

The position maintaining portions 42, 44 comprise rubber points.

An under side of the lower unit 2 is provided with a recess for storing a reserve spreader blade 18.

The first and second guide rails 30, 32 are disposed in the upper unit 4, and wherein the first and second guide rails 30, 32 define first and second longitudinal channel pairs 34, 36, each extending along the longitudinal direction of the first and second side parts 14, 16 to receive the first and second engaging portions 52, 50, respectively.

### BRIEF DESCRIPTION OF THE FIGURES

Figure 1 shows the smear preparation device according to an embodiment of the present invention in its disassembled state;
Figure 2 shows the smear preparation device according to an embodiment of the present invention in its assembled state;
Figure 3 shows the upper unit of the smear preparation device according to an embodiment of the present invention;
Figure 4 shows a side view of the lower unit of the smear preparation device according to an embodiment of the present invention;
Figure 5 shows an under side view of the lower unit of the smear preparation device according to an embodiment of the present invention;
Figure 6a shows the spreader blade of the smear preparation device according to an embodiment of the present invention;
Figure 6b shows the magnetic mounting for the spreader blade of the smear preparation device according to an embodiment of the present invention;
Figures 7a)-e) show plan views of the lower part of the smear preparation device according to an embodiment of the present invention;
Figure 8a shows a side view of the lower part of the smear preparation device according to an embodiment of the present invention;
Figure 8b shows a side view of the upper part of the smear preparation device according to an embodiment of the present invention;
Figure 9 shows an end-on view of the smear preparation device according to an embodiment of the present invention;
Figures 10a)-e) show the movement principle of the upper and lower units of the smear preparation device according to an embodiment of the present invention;
Figures 11a)and b) show underneath views of the smear preparation device according to an embodiment of the present invention;
Figures 11c) and d) show an engaging portion of the smear preparation device according to an embodiment of the present invention;
Figures 12a)-c) show the connection principle of the upper unit with respect to the lower unit of the smear preparation device according to an embodiment of the present invention; and
Figure 13 shows a Sysmex slide module for use with the smear preparation device according to an embodiment of the present invention.

In the detailed description hereinbelow, like reference signs denote like features. The invention is exemplified in the embodiments described below. The invention is not limited to these embodiments, which are schematically shown.

### DETAILED DESCRIPTION

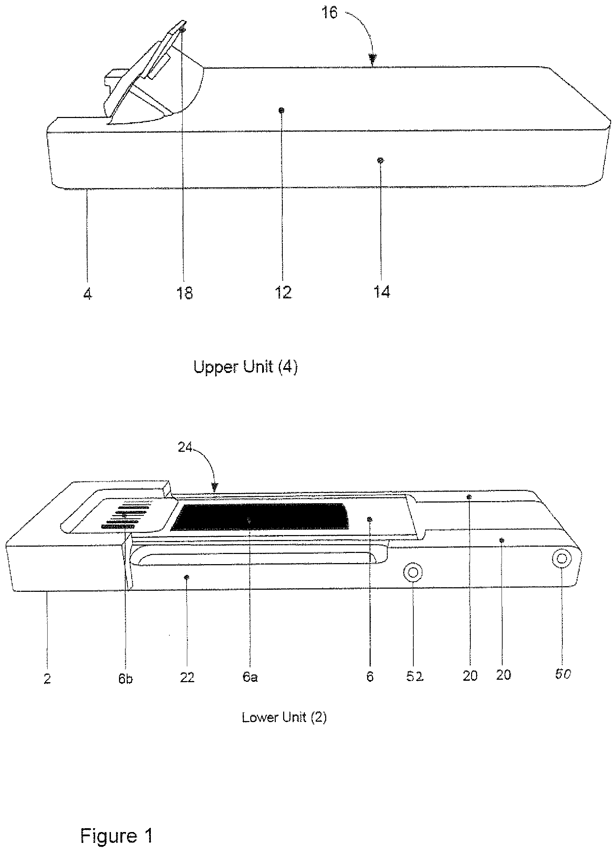

Figure 1 shows the smear preparation device according to an embodiment of the present invention in its disassembled state.

According to an embodiment of the present invention, the smear preparation device is portable, in particular, it may be pocket sized. The smear preparation device is of a semiautomatic type, that is whilst a user is involved in the preparation of the smear, the device is configured such that the result achieved does not depend on the skill or experience of the user. In this way, a compact device is achieved which provides consistent results. The smear preparation device provides a smear of a sample. The sample is provided in a fluid, in particular liquid form. The sample may be a blood sample or other bodily fluids. The type of the sample is not limited in this respect and, in principle may be any type of fluid which may be formed into a smear on a slide. Primarily, the device is used to prepare smears of human and veterinary body fluids. It also is possible to prepare smears from cell cultures and antibody titer tests using the device of the present invention.

According to the first aspect of the present invention, the smear preparation device comprises a lower unit 2 on which a slide 6 is disposable at a receiving location. The lower unit 2 has a first side 22 and a second side 24. The smear preparation device further comprises an upper unit 4 movably connectable to the lower unit 2. The upper unit 4 is arranged to receive a spreader blade 18 for smearing a sample on the slide 6. The upper unit 4 comprises in the first embodiment an upper part 12. It further comprises first and second side parts 14, 16 projecting downwards from the upper part 12 and substantially covering the first and second sides 22, 24 of the lower unit 2.

According to an embodiment of the first aspect of the invention, the smear preparation device may also comprise a first guide rail 30 disposed on at least one of the lower unit 2 and the upper unit 4. It may also further comprise at least one first engaging means 52 disposed on the other of the at least one of the lower unit 2 and the upper unit 4, wherein the first guide rail 30 is engagable with the first engaging means 52 so that the speed with which the lower unit 2 and the upper unit 4 are movable with respect to one another is controlled. These features are optional with respect to the first aspect of the invention.

According to the third aspect of the present invention, the smear preparation device comprises a lower unit 2 on which a slide 6 is disposable at a receiving location. The smear preparation device also comprises an upper unit 4 movably connectable to the lower unit 2. The upper unit 4 is arranged to receive a spreader blade 18 for smearing a sample on the slide 6. The device further comprises a first guide rail 30 disposed on at least one of the lower unit 2 and the upper unit 4 and at least one first engaging means 52 disposed on the other of the at least one of the lower unit 2 and the upper unit 4, wherein the first guide rail 30 is engagable with the first engaging means 52 so that the speed with which the lower unit 2 and the upper unit 4 are movable with respect to one another is controlled.

According to an embodiment of the third aspect of the present invention, the lower unit 2 may have a first side 22 and a second side 24. Further, the upper unit 4 may comprise an upper part 12; and first and second side parts 14, 16 projecting downwards from the upper part 12 and substantially covering the first and second sides 22, 24 of the lower unit 2. These features are optional with respect to the first aspect of the invention.

The first and third aspects of the present invention together with various embodiments and further aspects of both the first and third aspects are described hereinbelow in further detail.

The lower and upper units 2, 4, extend lengthwise in a longitudinal direction. In an assembled state, the lower and upper units 2, 4 are movable with respect to one another in the longitudinal direction. The smear is prepared by moving the lower and upper units in the longitudinal direction. The speed with which the lower and upper units 2, 4 is controllable. The speed control is described in further detail hereinbelow.

The lower and upper units 2, 4 are pivotable with respect to one another, which enables them to be connected and disconnected from one another. In an open position, a slide 6 can be disposed in the lower unit 2. In a closed position, the smear can be prepared. The interconnection of the lower and upper units 2, 4 is described in further detail hereinbelow.

The slide 6 is typically a glass slide (also referred to as a slide glass). In the embodiment shown in Figure 1, the smear preparation device is arranged to receive one slide at a time. In particular, the lower unit 2 is arranged to receive one slide at a time.

The device is may be made from one or more of the following: a high grade or high quality steel or a high grade synthetic material.

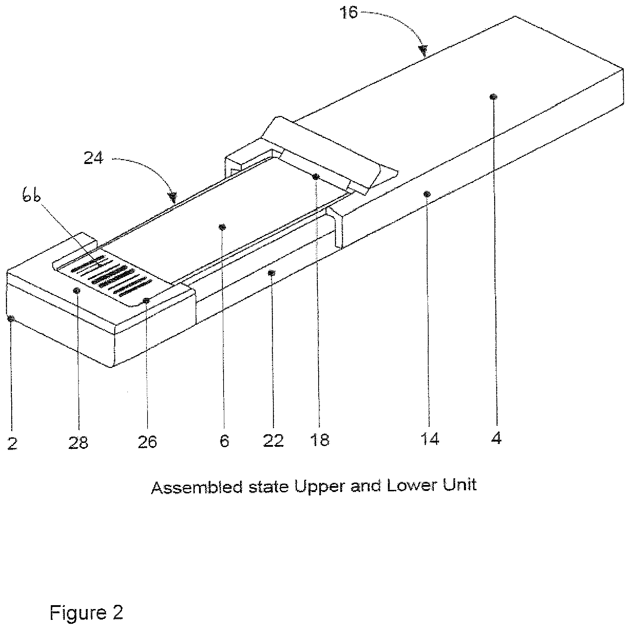

The lower unit 2 has a first side 22 and a second side 24. The smear preparation device also comprises an upper unit 4 movably connectable to the lower unit 2. The upper unit 4 comprises an upper part 12; and first and second side parts 14, 16. The first and second side parts 14, 16 project downwards from the upper part 12 and, in the assembled device, as shown in Figure 2, cover the first and second sides 22, 24 of the lower unit 2.

The smear preparation device is arranged to receive a spreader blade 18 for smearing a sample on the slide 6. In one embodiment, the device includes a spreader blade 18. The spreader blade 18 is mountable on the upper unit 4. In particular, it may be removably mounted. It is disposed adjacent to the slide 6 placed on the lower unit 2. The spreader blade 18 is arranged with respect to the slide to produce a monolayer of sample on the slide when it is moved across the slide 6 to smear the sample. The spreader blade 18 can be made of glass, plastic or other synthetic material.

In one embodiment, where the slide is made of a glass material, the spreader blade may be made e.g. of a material different from that of the slide, in particular, plastic. In this way, it has been found that a particularly controlled quality of smear is produced.

The slide 6 comprises a smear portion 6a on which the sample is disposed and subsequently smeared and an identification portion 6b on which data is provided regarding the slide. For example, to identify the slide.

Figure 2 shows the smear preparation device according to an embodiment of the present invention in its assembled state.

According to an embodiment, the first and second side parts 14, 16 of the upper unit 4 are arranged to be gripped by a user. The user grips the first and second side parts 14, 16 to move the upper unit 4 with respect to the lower unit 2. This causes the spreader blade 18 to smear the sample on the slide 6.

The first and second sides 22, 24 extend in a lengthwise direction of the device and extend to the extent of a zone, in the lengthwise direction, in which the sample is smeared.

Further, the upper unit 4 extends over an upper surface 20 of the lower unit 2 and the first and second sides 22, 24 of the lower unit 2 to substantially form a cover over the zone in which the sample is smeared when in an assembled state.

In the assembled state, the first and second side parts 14, 16 cover the first and second sides 22, 24 of the lower unit 2. The user can then grip the first and second side parts 14, 16 to move the upper unit 4 with respect to the lower unit 2. This causes the spreader blade 18 to smear the sample on the slide 6.

In the assembled state, the upper unit 4 extends over an upper surface 20, shown in Figure 1, of the lower unit 2 and the first and second side parts 14, 16 substantially form a cover over the lower unit 4, at the location where smear portion 6a is located on the lower unit 4.

The upper and lower units are configured such that in the assembled state the upper unit 4 substantially covers that portion of the lower unit 2 where the smear portion 6a of the slide 6 is located. In this way, the risk that the user touches the sample on the slide is reduced.

When the upper unit 4 and the lower unit 2 are in the assembled state, a window 26 is formed through which data on the identification portion 6b is readable. For example, the upper and lower units 2, 4 may be configured so that the identification portion of the slide is visible to the user, for example through window 26. The window 26 is formed by virtue of the interconnection of the upper and lower units 2, 4. In particular, in an assembled state, the upper and lower units 2, 4 interconnect with each other so as to form the window 26 through which the identification portion 6b of the slide is visible to the user. The data on the identification portion 6b is readable by virtue of the window 26. The data may be readable by a user or by another means, such as a scanner, for example, a barcode scanner or other automated means.

Indeed the upper unit 4 may be configured so that it only forms a cover on the portion of the lower unit 2 on which the smear portion 6a of the slide 6 is located in use. As mentioned, the identification portion 6b of the slide 6 is not covered by the upper unit 4. In this way, in the assembled state the upper surface 28 of the portion of the lower unit 2 which is arranged to receive the identification portion 6b of the slide, is arranged to be flush with the upper surface 20 of the upper unit 4. In this way, a compact device is achieved.

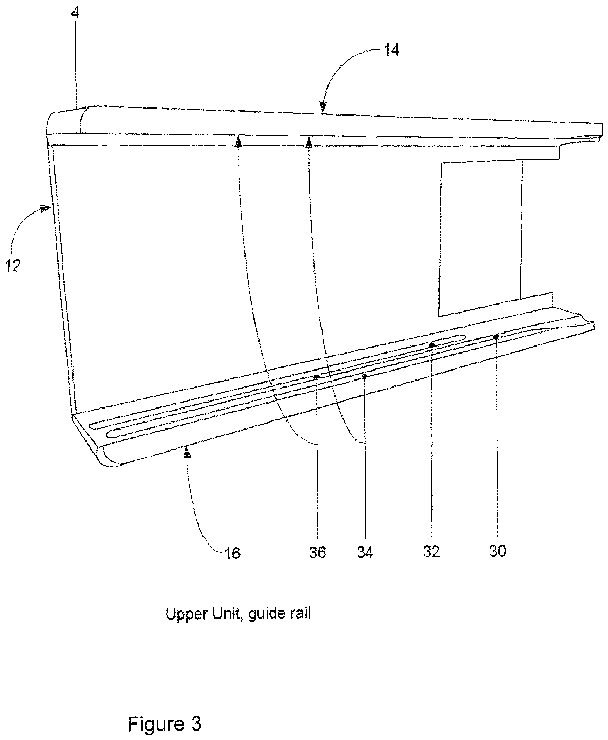

Figure 3 shows the upper unit of the smear preparation device according to an embodiment of the present invention.

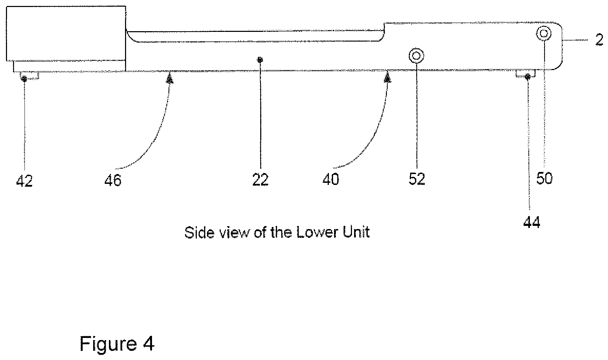

In the embodiment shown, the upper unit 4 has a first guide rail 30 which, when engaged with first engaging portions 52 (as shown in Figure 4) enables the speed with which the upper unit 4 and the lower unit 2 are movable with respect to one another to be controlled.

The upper unit 4 may also comprise a second guide rail 32, which when engaged with second engaging portions 50 allow the upper unit 4 to be connected to the lower unit 2.

The connection of the upper unit 4 to the lower unit 2 by virtue of the first guide rail 30 provides a controlled relative movement speed between the upper and the lower units 4, 2. The manner and mechanism with which the upper unit 4 and lower unit 2 are connected is described in further detail hereinbelow.

In particular, in one embodiment, the first and second guide rails 30, 32 define first and second longitudinal channel pairs 34, 36, each extending along the longitudinal direction of the first and second side parts 14, 16 of the upper unit 4 to receive at least one first and second engaging portions 52, 50, respectively.

In the embodiment shown, the first and second guide rails 30, 32 are disposed on the upper unit 4 and the first and second engaging means are disposed on the lower unit 2. In an alternative embodiment, the first and second guide rails may be disposed on the lower unit and the first and second engaging portions may be disposed on the upper unit.

With reference to Figures 3 and 4, a second guide rail 32 is disposed on the upper unit 4 and at least one second engaging means 50 disposed on the lower unit 2. The second guide rail 32 is engagable with the second engaging means 50 to allow the upper unit 4 to be removably connected to the lower unit 2.

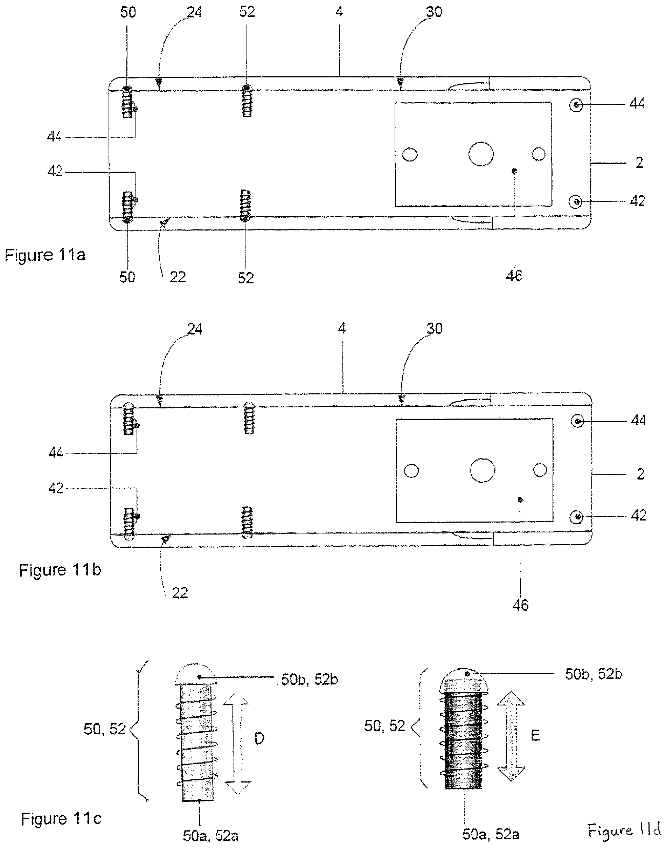

With reference to Figures 4, 8, 9 and 11, the first and second engaging portions 52, 50 may comprise one or more spring portions 52, 50 which are arranged to engage with at least one of the first and second guide rail 30, 32, respectively. In an engaged state, the first and second engaging portions 52, 50 exert a force on the first and second guide rails 30, 32, respectively. The first engaging portion 52 is adjustable to adjust the force exerted on the first guide rail 30 to control the speed with which the lower unit 2 and the upper unit 4 are movable with respect to one another. As shown in Figures 11c and d, the spring portions 52, 50 comprise at least one clip pin, the clip pin comprises a spring and a cap.

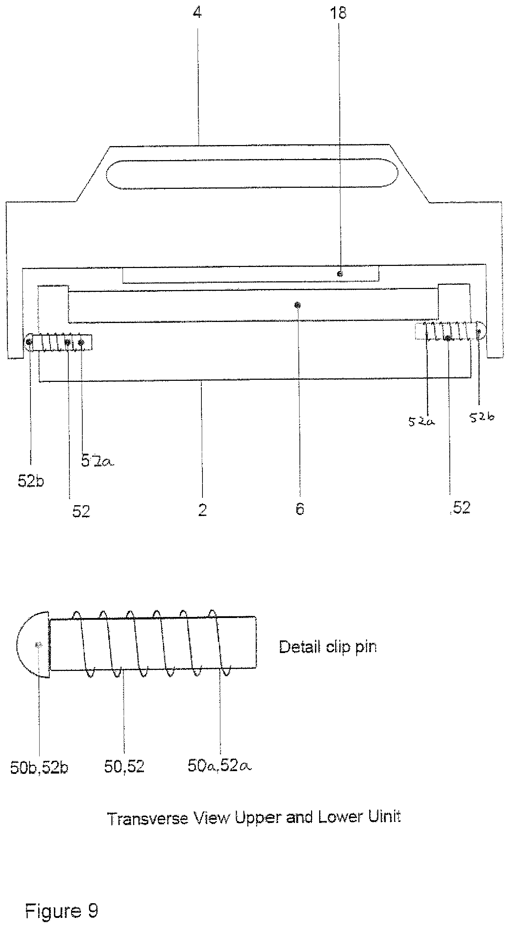

The force exerted by the one or more spring portions 52, 50 is adjusted by depressing the spring portion 52, 50 into the lower unit 2 (or upper unit 4, respectively), as shown in and described with reference to Figures 9 and 11.

In particular, in the first engaging portion 52, the cap is arranged to extend and retract with respect to the spring to vary the extent to which the spring portion 52 extends into the first guide rail 30. In this way, the speed with which the upper unit 4 moves with respect to the lower unit 2 in the plane in which the slide is disposed in the device can be controlled.

Similarly, in the second engaging portion 50, the cap is arranged to extend and retract with respect to the spring to vary the extent to which the spring portion 50 extends into the second guide rail 32. Similarly, in this way ,the force required to interconnect the lower unit 2 with respect to the upper unit 4 can be controlled.

With reference to Figures 3, 9 and 11, when the cap is extended on the spring (refer to Figure 11c), it extends into the first guide rail 30 (refer to Figure 3) to cause a decrease in the relative speed with which the upper unit 4 moves with respect to the lower unit 2. When the cap is retracted on the spring (refer to Figure 11d), the spring portion extends to a lesser degree into the first guide rail 30 to increase the relative speed with which the upper unit 4 moves with respect to the lower unit 2.

In one embodiment, the first guide rail 30 comprising the first longitudinal channel pair 34 is disposed beneath the second guide rail 32 comprising the second longitudinal channel pair 36.

Figure 4 shows a side view of the lower unit of the smear preparation device according to an embodiment of the present invention.

The lower unit 2 has an underside 40. According to an embodiment of the invention, the spreader blade 18 is replaceable. The underside 40 of the lower unit 2 is provided with a recess 46 for storing a reserve spreader blade. In this way, an efficient use of space is achieved and the user is provided with a spare spreader blade should it be required.

The lower unit 2 may also comprise a plurality of engaging portions 50, 52, which may typically comprise spring portions 50, 52. First and second engaging portions 52, 50 engage with the first and second guide rails 30, 32, respectively. The engaging portions 50, 52 are arranged to exert pressure on the upper unit 4 when engaged with the first guide rail 32, and wherein the pressure exerted on the upper unit 4 is adjustable by adjusting the engaging portions, in particular by adjusting the spring portions, to vary the speed with which the upper unit 4 moves with respect to the lower unit 2.

The mechanism of the connection of the upper and lower units 4, 2 is described in detail hereinbelow.

The underside 40 of the lower unit 2 may further be provided with position maintaining portions 42, 44 for maintaining the position of the device, in particular, the lower unit 2, with respect to the surface on which it is placed. The position maintaining portions 42, 44 may comprise, for example, rubber points. The position maintaining portions 42, 44 may be disposed towards each corner of the lower unit to provide stability. In this way, the device can be maintained in a stable manner on a working surface.

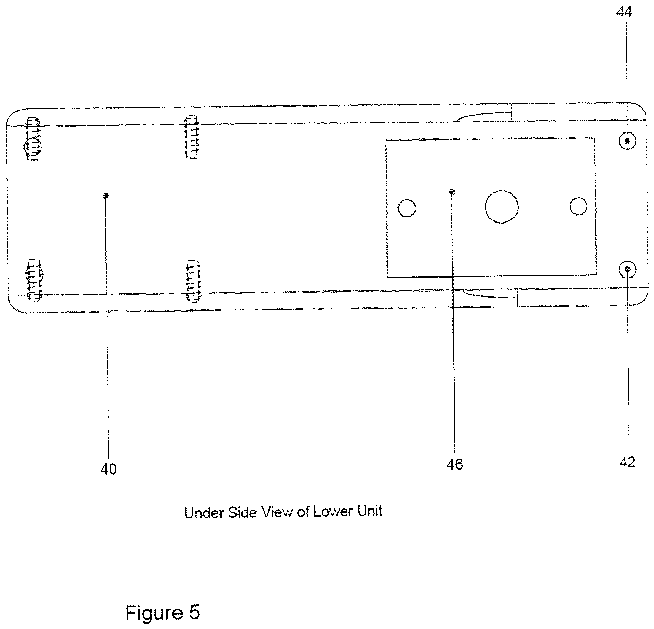

Figure 5 shows an under side view of the lower unit of the smear preparation device according to an embodiment of the present invention. In particular, Figure 5 shows in more detail, the underside view shown in Figure 4. The recess 46 in which a reserve spreader blade is disposable is shown. Also, the position maintaining means 42, 44 are depicted. Two further positioning maintaining means (not shown) are disposed at the opposite ends of the underside 40 of the lower unit 2. In this way, a stable arrangement is achieved.

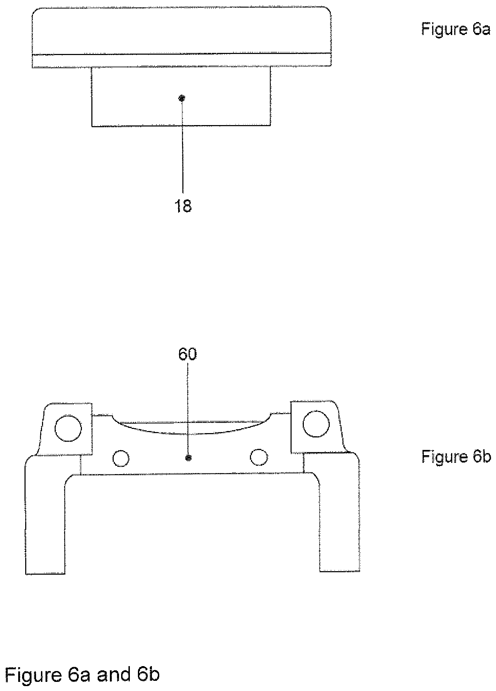

Figure 6a shows the spreader blade of the smear preparation device according to an embodiment of the present invention. Figure 6b shows the mounting mechanism for the spreader blade of the smear preparation device according to an embodiment of the present invention. In Figure 6b, the spreader blade is mounted with a screw mounting means. The mounting mechanism may also include a magnetic mounting mechanism.

The spreader blade 18 is mountable on the upper unit 4. In particular, it is disposed adjacent to the slide 6 placed on the lower unit 2. The spreader blade 18 is arranged to form a mono layer of sample on the slide 6 when the spreader blade 18 is moved across the slide 6 to smear the sample. For example, the spreader blade is mounted at an angle with respect to the slide of 55 to 65°, in particular, at around 60°. In particular, it has been found that the angle at which the spreader blade 18 is mounted with respect to the slide on the lower unit is dependent on the thickness of the blade.

As shown in Figures 6a and 6b, the spreader blade 18 may be removably mounted on a mounting device. In particular, the spreader blade is removably mounted on the upper unit 4 with with a mounting means 60, such as screws or a magnetic mounting. In this way, a versatile device is provided, in which the blade can be readily replaced if necessary, without requiring any additional tools.

Hereinbelow with respect to the following Figures, it is now described how the smear preparation is carried out and how the upper unit 4 is connected to the lower unit 2.

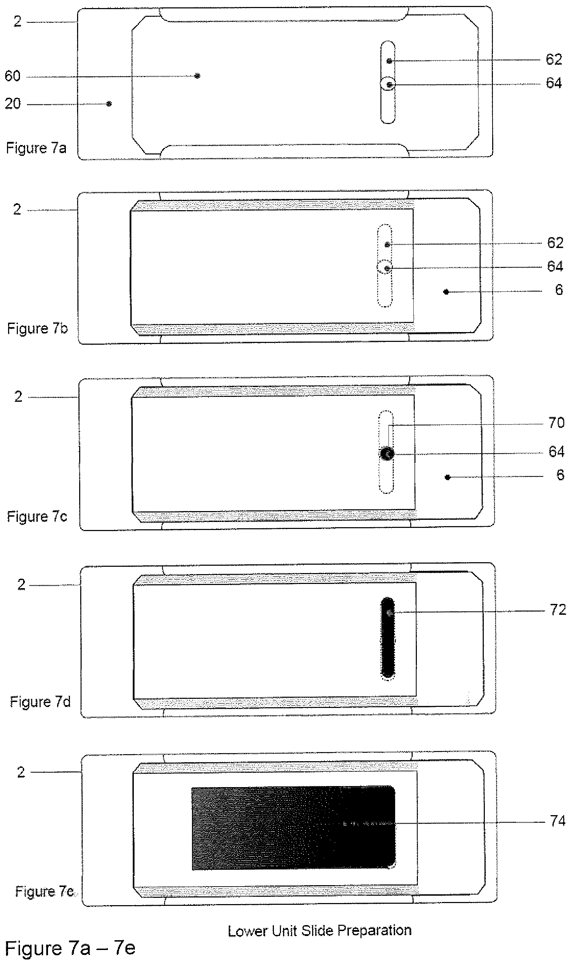

Figures 7a)-e) show plan views of the lower unit of the smear preparation device according to an embodiment of the present invention.

Figure 7a shows a plan view of the lower unit 2 without a slide in place. The lower unit 2 comprises a receiving section 60 for receiving a slide 6 disposed on the lower unit. The receiving section 60 is dimensioned so that when a slide 6 is disposed in the receiving section 60 and the lower unit 2 is engaged with upper unit 4, the slide is received into the second guiding rail 32. The receiving section 60 is also known as a frame border. In particular, the receiving section 60 comprises a recess 60 formed in the lower unit 2. The recess 60 is dimensioned to receive the slide 6, wherein when the slide 6 is disposed in the recess 60, an upper surface of the slide 6 is flush with an upper surface 20 of the lower unit 2. The lower unit 2 may also be provided with a marked area 62, 64 giving an indication to the user of at least one of where the sample is to be disposed 62 and the volume of the sample to be disposed 64. The marked area 62, 64 is visible to the user through the slide 6 when the slide is disposed on the lower unit 2. The marked area 62, 64 may also be referred to as an orientation point. The orientation point is indicated to position the sample drop.

The dimensions of the receiving section 60 are such that they fit for a particular slide, for example but not limited to, a slide from Sysmex. In particular, the receiving section 60 is dimensioned to accommodate the angle of the particular slide form. The orientation point 62, 64 provides information to the user on where to position the sample drop and also an indication of the volume to be provided. In particular, the orientation point 62 further provides an indication of the maximum extension position from the sample drop to ensure a high quality smear preparation. In this way, a user with even limited experience is able to provide a high quality smear if he follows the indications provided on the device.

Figure 7b shows a plan view of the lower unit 2 with a slide 6 in place. It is seen that the orientation points 62, 64 are visible to the user through the slide 6.

Figure 7c shows a plan view of the lower unit 2 with a slide 6 in place wherein a sample drop 70 is disposed on the marked area 64. Preferably, if the user disposes the sample drop as indicated on the marked area a proper smear preparation is achieved.

Figure 7d shows a plan view of the lower unit 2 if it were visible once the upper unit 4 and the lower unit 2 are connected. The connection of the two units is described in detail below. When the upper unit 4 is connected with the lower unit 2, the spreader blade is brought into close proximity with the sample, so that the sample drop runs along the adjacent edge of the spreader blade to form a pre-smear distribution of sample 72. The sample drop runs across the whole length of the spreader blade.

Once the upper and lower units 4, 2 are connected, the user grips the first and second side parts 14, 16 of the upper unit 4 and moves the upper unit 4 with respect to the lower unit 2 in the longitudinal direction of the disposition of the slide 6 in the lower unit 2. This causes the spreader blade to move across the slide 6 in the longitudinal direction to prepare the smear.

Figure 7e shows a plan view of the prepared smear 74.

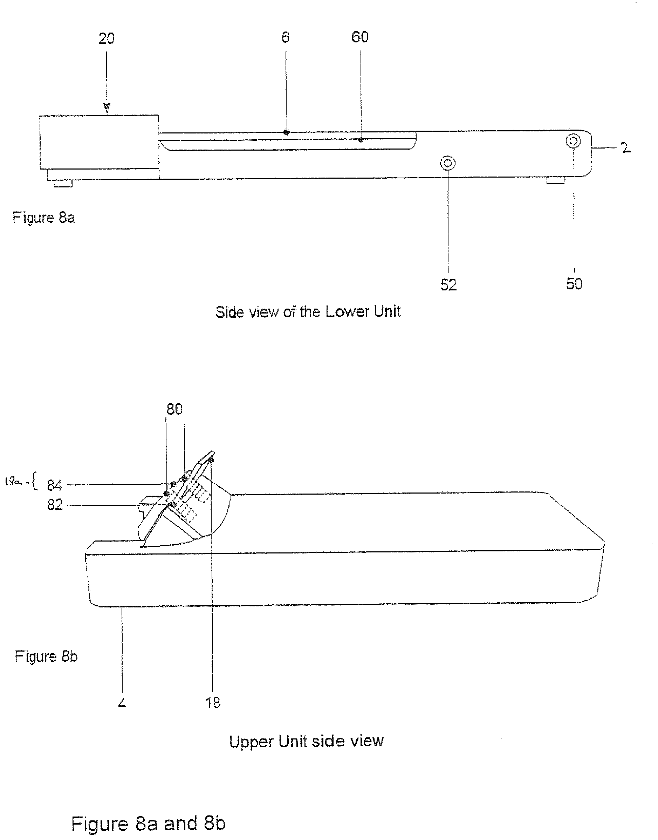

Figure 8a shows a side view of the lower part of the smear preparation device according to an embodiment of the present invention. It is seen that the slide 6 disposed in the recess 6 has an upper surface which is flush with an upper surface 20 of the lower unit. Engaging portions 50, 52 are provided in the body of the lower unit 2.

Figure 8b shows a side view of the upper unit of the smear preparation device according to an embodiment of the present invention. Figure 8b shows how the spreader blade 18 is mounted and fixed to the upper unit 4 by using a mounting means 80, such as screws or a magnetic mounting. For example, by using magnetic plug inserts 82 and a magnetic plate 84, which are disposed on an upper portion 18a of the spreader blade 18. In this way, an easy exchange process for the spreader blade is achieved.

Figure 9 shows an end-on (transverse) cutaway view of the smear preparation device according to an embodiment of the present invention. Figure 9 shows the first engaging portion 52. The second engaging portion 50 functions in the same manner and is also described herein below. Figure 9 shows the upper unit 4 and the lower unit 2 in an assembled state. The upper unit 4 and the lower unit 2 are connected by virtue of the engagement of the engaging portions 50, 52 in the guide rails. The engaging portions may be spring portions. In one embodiment, the engaging portion is a clip pin. The clip pin 50, 52 comprises a spring 50a, 52b and a cap 50b, 52b. The spring 50a, 52a extends into the body of the lower unit 2. The cap 50b, 52b extends out of the body and exerts a force on the upper unit 4. The cap 50b, 52b is arranged to engage with a guide rail 30, 32 of the upper unit 4. The cap 50b, 52b is arranged to extend and retract with respect to the spring 50a, 52a to vary the extent to which the spring portion 50, 52 extends into the guide rails 30, 32, respectively. In this way, the speed with which the upper unit 4 moves with respect to the lower unit 2 is varied. It has been found that the more force the first engaging portion, 52 exerts on the upper unit 4 via, for example, the first guide rail 30, the slower the speed with which the upper unit 4 is moved with respect to the lower unit 2. In particular, when the cap is extended on the spring, it extends into the guide rail to cause a decrease in the relative speed with which the upper unit moves with respect to the lower unit. Further, when the cap is retracted on the spring, the spring portion extends to a lesser degree into the first guide rail to increase the relative speed with which the upper unit moves with respect to the lower unit. The spring portion 50, 52 is adjusted by depressing the spring portion 50, 52 into the lower unit. By adjusting the clip pin of the second engaging portion 50, the interconnection of the upper and lower units 4, 2 can also be controlled. The extension and retraction of the cap is seen and described in further detail in Figures 11a)-d).

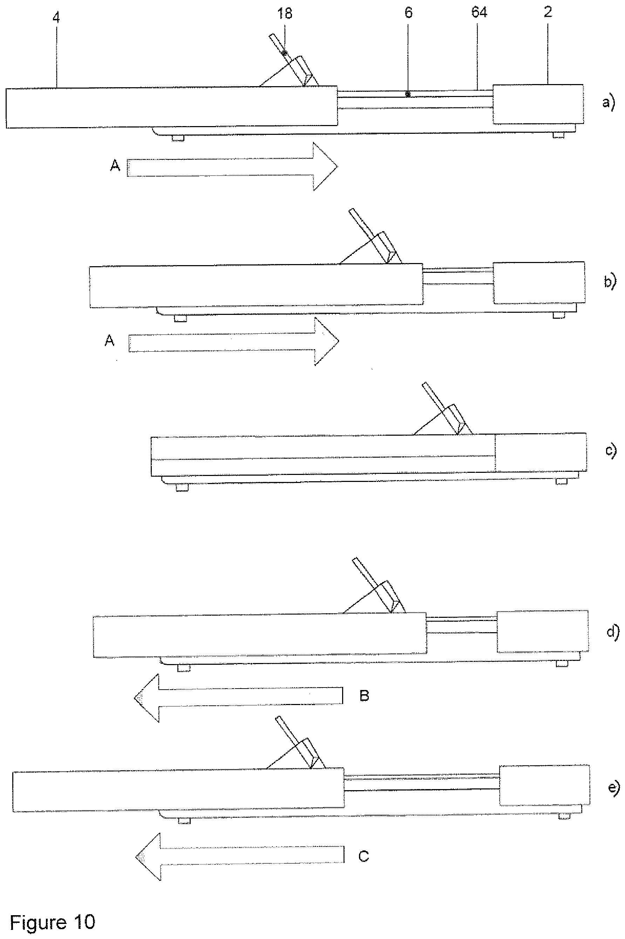

Figures 10a)-e) show the movement principle of the upper and lower units of the smear preparation device according to an embodiment of the present invention.

Figure 10a) shows the disposition of the lower unit 2 and the upper unit 4 with respect to one another when the slide 6 is disposed on the lower unit 2 and the sample drop is disposed on the slide 6. The sample is disposed at marked area 64. Once the sample is disposed, the user grips the first and second side parts 14, 16 of the upper unit 4 and moves the upper unit 4 in the direction shown by arrow A. In this way, the upper unit 4 is moved to the location of the sample drop, as shown in Figure 10b). As described above, the spreader blade 18 is disposed so that when it reaches the location of the sample drop, the sample drop extends along the length of the blade 18 (see Figure 7d)). In particular, the sample drop runs along the adjacent edges of the spreader blade 18. This occurs when the upper and lower units are disposed as shown in Figure 10c).

Once the sample drop has extended along the spreader blade 18, the user, again by gripping the first and second side walls 14, 16 of the upper unit 4 moves the upper unit 4 in the direction shown by arrow B in Figure 10d). By drawing the spreader blade 18 across the slide 6 in this process, the smear is automatically prepared. The user then continues to move the upper unit 4 in the direction shown by arrow C, as shown in Figure 10e) until it reaches a stop position, which corresponds to the start position shown in Figure 10a), at which the prepared slide 6 is removed from the lower unit 2.

The spreading of the sample behind the spreader blade 18 is a visual observation by the user. As soon as the sample is spread over the whole spreader blade the upper unit can slide over the lower unit.

Figures 11a) and b) show underside views of the smear preparation device according to an embodiment of the present invention. The features depicted correspond to those described with respect to previously described figures. Figures 11a) and b), in particular, show how the engaging portions 50, 52 extend into the guide rails 30, 32 (shown in Figure 3) to connect the upper unit 4 with the lower unit 2. As mentioned, the upper unit 4 and the lower unit 2 are connected by using a guide rail 30. Further once connected, and once a slide 6 is inserted in the lower unit 2, the slide 6 also engages with a further guide rail 32 (shown in Figure 3) .

As shown in Figures 11a) and b), the lower unit comprises a body portion into which the engaging portion 50, 52 extends and exerts a force outwards from the first and second sides 22, 24 of the lower unit 2.

Once the upper and lower units 4, 2 are connected, the speed with which the upper unit 4 and lower unit 2 are moved with respect to one another is controlled by using two engaging portions 50 on either side of the lower unit. Figure 11a) shows engaging portions 52 on either side of the lower unit 2. In Figure 11a) engaging portions 52 engage with the guide rail 30 for, in particular, determining the movement between the lower and upper units 2, 4 in the plane of the slide 6. Engaging portions 50 engage with the guide rail for providing a pivotable interconnection between the lower and upper units 2, 4.

As seen in Figure 11a), engaging portions 52 extend into the guide rail 30. In this way, the speed with which the upper unit 4 is moved, in the plane of the slide 6, with respect to the lower unit 2 is controlled. In Figure 11b), it is seen that the engaging portions 50 do not extend into the guide rail 30 to the extent shown in Figure 11a). As a result, in the arrangement shown in Figure 11b), the upper unit 4 can be moved faster with respect to the lower unit 2. With respect to Figure 11b), in particular, by pressing the engaging portion 50 deep into the lower unit 2, the upper unit 4 will move faster in the guide rail within the upper unit 4 and the speed of the smear preparation is faster, which is for example, desirable when using EDTA blood. With respect to Figure 11a), in particular, by pushing the engaging portion 50 out of the lower unit 2, the upper unit 4 moves slower in the guide rail in the upper unit 4 and the speed of the smear preparation is consequently slower. This for example, is sufficient for preparation of body fluid smears. Therefore, by adjusting the spring portions, the speed can be readily adjusted depending on the type of smear to be prepared. In this way, the device according to this embodiment of the invention, is versatile in its application range.

Figures 11c) and d) show an engaging portion of the smear preparation device according to an embodiment of the present invention.

The engaging portion 50, 52 has a spring 52a, 52b and a cap 52b. The cap 50b, 52b is disposed on an end of the spring 50a, 50b. The cap 50b, 52b is able to move up and down with respect to the spring 50a, 52b, as shown by the arrows D and E in Figures 11c) and d). This results in a relative change in length of the engaging portion 50, 52 and hence, determines the extent with which the engaging portion 50, 52 extends into the guide rail, which as discussed above, directly influences the speed of the movement during smear preparation. In particular, the cap 50b, 52b is disposed on the spring 50a, 52a and is arranged in use so that it extends into the guide rails.

For example, in the engaging portion 50, 52, shown in Figure 11c), the engaging portion 50, 52 is in its extended position. In particular, the cap 50b, 52b extends on the upper end of the spring 50a, 52a. In the engaging portion 50, 52 shown in Figure 11d), by contrast, the engaging portion 50, 52 is in its fixed/pressured position, where the cap 50b, 52b is depressed onto the top of the spring 50a, 52b, which allows a higher speed in the guiding rail 30, 32 of the upper unit 4.

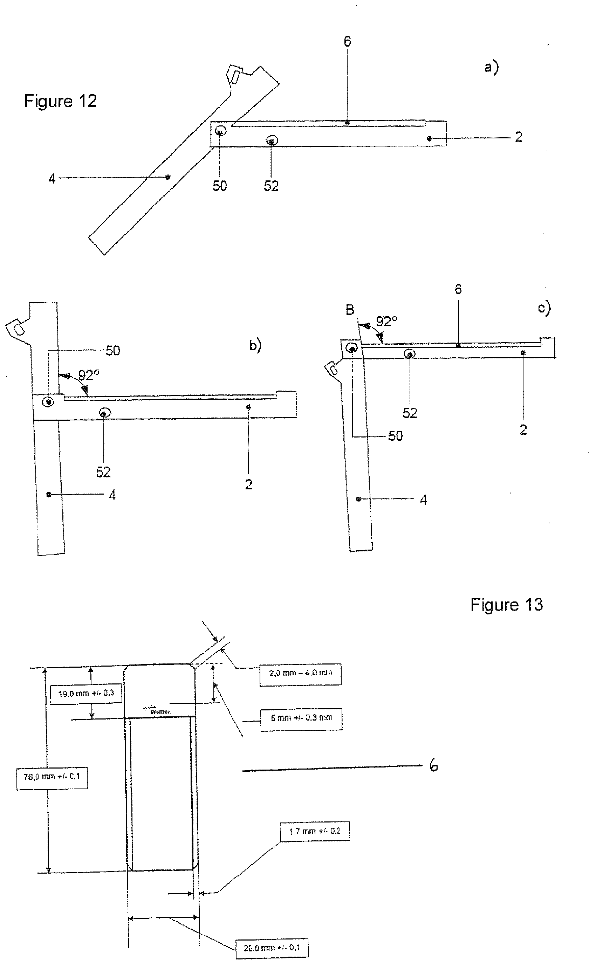

Figures 12a)-c) show the connection principle of the upper unit with respect to the lower unit of the smear preparation device according to an embodiment of the present invention.

As mentioned, the connection of the upper unit 4 to the lower unit 2 is achieved using clip pins based on the principle of a spring support system in the lower unit 2 which are routed by guide rails 30, 32 provided in the upper unit 4 with which they engage. These guide rails 30, 32 also allow the upper and lower units 4, 2 to be disconnected from one another. In particular, the second guide rail 32 allows the upper and lower units 4, 2 to be connected and disconnected with each other, so that they are connectable in a pivotable manner.

In particular, as shown in Figures 12a)-c), the upper unit 4 and lower unit 2 are pivotally mounted with respect to one another. In particular, the upper unit 4 pivots with respect to lower unit 2 around an axis defined by two of the spring portions 50. In particular, an axis defined by the locations of the engagement of the at least one engaging portion 50 with the at least one second guide rail 32. Further, the force with which the upper unit 4 is held in its pivotable mounted position with respect to the lower unit 2 is determined by the force exerted by the second engaging portion 50 in the second guide rail 32. The upper unit 4 and the lower unit are pivotable with respect to one another to an open position in which a slide can be disposed and removed from the lower unit (Figure 12b) and c)). Further, the upper unit 4 and lower unit 2 are pivotable with respect to one another to a closed position in which the smear can be prepared by moving the spreader blade with respect to the slide disposed on the lower unit (Figure 10).

In the open position, the upper unit 4 and the lower unit 2 are substantially perpendicular with respect to one another, in particular, are at an angle of 92° with respect to one another (Figure 12b) and c)).

In an engaging position (Figure 12a)) in which the upper unit 4 is engagable with the lower unit 2 (by virtue of the second engaging means 50 and the second guide rail 32), the upper unit 4 is at an angle with respect to the lower unit of approximately 45°, in particular, 42°.

Figure 13 shows a Sysmex slide module for use with the smear preparation device according to an embodiment of the present invention. Figure 13 provides the dimensions of the slide. Of course, the present invention is applicable to other slide types having different dimensions. In which case, the recess 60 may have different dimensions. In any case, as is seen in the foregoing, a major limiting factor determining the size of the compact device of the present invention is the size of the slide itself.

## Claims

1. A smear preparation device, comprising:
a lower unit (2) on which a slide (6) is disposable at a receiving location, the lower unit (2) having a first side (22) and a second side (24) which extend in a lengthwise direction of the device;
an upper unit (4) movably connectable to the lower unit (2), and receiving a spreader blade (18) for smearing a sample and forming a smear portion (6a) on the slide (6), the upper unit (4) comprising:
an upper part (12); and
first and second side parts (14, 16) projecting downwards from the upper part (12) and substantially covering the first and second sides (22, 24) of the lower unit (2),
wherein the upper unit (4) extends over an upper surface (20) of the lower unit (2) and the first and second sides (22, 24) of the lower unit (2) to substantially form a cover over a zone in which the sample is smeared when in an assembled state,
**characterised in that**: the upper unit (4) covers the smear portion (6a) on the slide (6) in the lower unit (2) when in a closed position of the assembled state.

2. The smear preparation device according to claim 1, further comprising a first guide rail (30) disposed on at least one of the lower unit (2) and the upper unit (4) and at least one first engaging means (52) disposed on the other of the at least one of the lower unit (2)and the upper unit (4), wherein the first guide rail (30) is engagable with the first engaging means (52) so that the speed with which the lower unit (2) and the upper unit (4) are movable with respect to one another is controlled.

3. The smear preparation device according to claim 2, further comprising a second guide rail (32) disposed on at least one of the lower unit (2) and the upper unit (4) and at least one second engaging means (50) disposed on the other of the at least one of the lower unit (2) and the upper unit (4), wherein the second guide rail (32) is engagable with the second engaging means (50) to allow the upper unit (4) to be removably connected to the lower unit (2).

4. The smear preparation device according to any of claims 1-3, wherein the first and second sides (22, 24) extend to the extent of a zone, in the lengthwise direction, in which the sample is smeared.

5. The smear preparation device according to any of claims 2-4, wherein at least one of the first guide rail (30) and the second guide rail (32) is disposed on the upper unit (4) and at least one of the first engaging means (52) and the second engaging means (50) is disposed on the lower unit (4), respectively.

6. The smear preparation device according to any of claims 3-5, wherein the first and second engaging means (52, 50) comprise one or more spring portions (52, 50) which are arranged to engage with at least one of the first and second guide rail (30, 32), respectively.

7. The smear preparation device according to any of claims 3-6, wherein the first and second engaging means (52, 50), in an engaged state exert a force on the first and second guide rails (30, 32), respectively.

8. The smear preparation device according to claim 7, wherein the first engaging means (52) is adjustable to adjust the force exerted on the first guide rail (30) to control the speed with which the lower unit (2) and the upper unit (4) are movable with respect to one another.

9. The smear preparation device of any of claims 1-8, wherein the upper unit (4) and the lower unit (2) are pivotable with respect to one another to an open position in which a slide (6) can be disposed and removed from the lower unit (2).

10. The smear preparation device of any of claims 1-9, wherein the upper unit (4) and lower unit (2) are pivotable with respect to one another to the closed position in which the smear can be prepared by moving the spreader blade (18) with respect to the slide disposed on the lower unit (2).

11. The smear preparation device according to any of claims 1-10, wherein the lower unit (2) comprises a marked area (62, 64) giving an indication to the user of where the sample is to be disposed (62) and the volume of the sample to be disposed (64), wherein the marked area (62, 64) is visible to the user through the slide (6) when the slide (6) is disposed on the lower unit (2).

## Patentansprüche

1. Verschmierungsvorbereitungsvorrichtung, umfassend:
eine untere Einheit (2), an der eine Rutsche (6) an einem Empfangsort angeordnet werden kann, wobei die untere Einheit (2) eine erste Seite (22) und eine zweite Seite (24) aufweist, die sich in eine Längsrichtung der Vorrichtung erstrecken;
eine obere Einheit (4), die mit der unteren Einheit (2) beweglich verbindbar ist und eine Verteilklinge (18) zum Verschmieren einer Probe und Bilden eines Verschmierungsabschnitts (6a) auf der Rutsche (6) aufnimmt, die obere Einheit (4) umfassend:
einen oberen Teil (12); und
erste und zweite Seitenteile (14, 16), die vom oberen Teil (12) abwärts hervorstehen und im Wesentlichen die ersten und zweiten Seiten (22, 24) der unteren Einheit (2) bedecken,
wobei sich die obere Einheit (4) über eine obere Oberfläche (20) der unteren Einheit (2) und die ersten und zweiten Seiten (22, 24) der unteren Einheit (2) erstreckt, um im Wesentlichen eine Abdeckung über einer Zone zu bilden, in der die Probe in einem zusammengebauten Zustand verschmiert wird,
**dadurch gekennzeichnet, dass**: die obere Einheit (4) den Verschmierungsabschnitt (6a) auf der Rutsche (6) in der unteren Einheit (2) in einer geschlossenen Position des zusammengebauten Zustands bedeckt.

2. Verschmierungsvorbereitungsvorrichtung nach Anspruch 1, weiter umfassend eine erste Führungsschiene (30), die an mindestens einem der unteren Einheit (2) und der oberen Einheit (4) angeordnet ist, und mindestens ein erstes Eingriffsmittel (52), das am anderen der mindestens einen der unteren Einheit (2) und der oberen Einheit (4) angeordnet ist, wobei die erste Führungsschiene (30) mit dem ersten Eingriffsmittel (52) in Eingriff bringbar ist, sodass die Geschwindigkeit, mit der die untere Einheit (2) und die obere Einheit (4) in Bezug zueinander beweglich sind, gesteuert ist.

3. Verschmierungsvorbereitungsvorrichtung nach Anspruch 2, weiter umfassend eine zweite Führungsschiene (32), die an mindestens einem der unteren Einheit (2) und der oberen Einheit (4) angeordnet ist, und mindestens ein zweites Eingriffsmittel (50), das am anderen der mindestens einen der unteren Einheit (2) und der oberen Einheit (4) angeordnet ist, wobei die zweite Führungsschiene (32) mit dem zweiten Eingriffsmittel (50) in Eingriff bringbar ist, um der oberen Einheit (4) zu erlauben, mit der unteren Einheit (2) lösbar verbunden zu werden.

4. Verschmierungsvorbereitungsvorrichtung nach einem der Ansprüche 1-3, wobei sich die ersten und zweiten Seiten (22, 24) in der Ausdehnung einer Zone, in die Längsrichtung, erstrecken, in der die Probe verschmiert wird.

5. Verschmierungsvorbereitungsvorrichtung nach einem der Ansprüche 2-4, wobei mindestens eine der ersten Führungsschiene (30) und der zweiten Führungsschiene (32) an der oberen Einheit (4) angeordnet ist und entsprechend mindestens eines des ersten Eingriffsmittels (52) und des zweiten Eingriffsmittels (50) an der unteren Einheit (4) angeordnet ist.

6. Verschmierungsvorbereitungsvorrichtung nach einem der Ansprüche 3-5, wobei die ersten und zweiten Eingriffsmittel (52, 50) einen oder mehrere Federabschnitte (52, 50) umfassen, die dafür angeordnet sind, entsprechend in mindestens eine der ersten und zweiten Führungsschiene (30, 32) einzugreifen.

7. Verschmierungsvorbereitungsvorrichtung nach einem der Ansprüche 3-6, wobei die ersten und zweiten Eingriffsmittel (52, 50) in einem Eingriffszustand entsprechend eine Kraft auf die ersten und zweiten Führungsschienen (30, 32) ausüben.

8. Verschmierungsvorbereitungsvorrichtung nach Anspruch 7, wobei das erste Eingriffsmittel (52) einstellbar ist, um die auf die erste Führungsschiene (30) ausgeübte Kraft einzustellen, um die Geschwindigkeit, mit der die untere Einheit (2) und die obere Einheit (4) in Bezug zueinander beweglich sind, zu steuern.

9. Verschmierungsvorbereitungsvorrichtung nach einem der Ansprüche 1-8, wobei die obere Einheit (4) und die untere Einheit (2) in Bezug zueinander zu einer offenen Position verschwenkbar sind, in der eine Rutsche (6) an der unteren Einheit (2) angeordnet und von ihr entfernt werden kann.

10. Verschmierungsvorbereitungsvorrichtung nach einem der Ansprüche 1-9, wobei die obere Einheit (4) und untere Einheit (2) in Bezug zueinander zur geschlossenen Position verschwenkbar sind, in der die Verschmierung durch Bewegen der Verteilklinge (18) in Bezug zur an der unteren Einheit (2) angeordneten Rutsche vorbereitet werden kann.

11. Verschmierungsvorbereitungsvorrichtung nach einem der Ansprüche 1-10, wobei die untere Einheit (2) einen markierten Bereich (62, 64) umfasst, der dem Benutzer einen Hinweis, wo die Probe anzuordnen (62) ist, und über das Volumen der anzuordnenden (64) Probe gibt, wobei der markierte Bereich (62, 64) für den Benutzer durch die Rutsche (6) hindurch sichtbar ist, wenn die Rutsche (6) an der unteren Einheit (2) angeordnet ist.

## Revendications

1. Dispositif de préparation de frottis, comprenant :
une unité inférieure (2) sur laquelle une lamelle (6) peut être disposée à un emplacement de réception, l'unité inférieure (2) présentant un premier côté (22) et un second côté (24) qui s'étendent dans une direction de longueur du dispositif ;
une unité supérieure (4) pouvant être raccordée de manière mobile à l'unité inférieure (2), et recevant une lame épandeuse (18) pour étaler un échantillon et former une portion de frottis (6a) sur la lamelle (6), l'unité supérieure (4) comprenant :
une partie supérieure (12) ; et
des première et seconde parties latérales (14, 16) faisant saillie vers le bas à partir de la partie supérieure (12) et recouvrant sensiblement les premier et second côtés (22, 24) de l'unité inférieure (2),
dans lequel l'unité supérieure (4) s'étend sur une surface supérieure (20) de l'unité inférieure (2) et les premier et second côtés (22, 24) de l'unité inférieure (2) pour former sensiblement un couvercle sur une zone dans laquelle l'échantillon est étalé lorsqu'il est dans un état assemblé,
**caractérisé en ce que** : l'unité supérieure (4) recouvre la portion de frottis (6a) sur la lamelle (6) dans l'unité inférieure (2) lorsqu'il est dans une position fermée de l'état assemblé.

2. Dispositif de préparation de frottis selon la revendication 1, comprenant en outre un premier rail de guidage (30) disposé sur au moins une parmi l'unité inférieure (2) et l'unité supérieure (4) et au moins un premier moyen de mise en prise (52) disposé sur l'autre de l'au moins une parmi l'unité inférieure (2) et l'unité supérieure (4), dans lequel le premier rail de guidage (30) peut être mis en prise avec le premier moyen de mise en prise (52) de sorte que la vitesse à laquelle l'unité inférieure (2) et l'unité supérieure (4) sont mobiles l'une par rapport à l'autre soit commandée.

3. Dispositif de préparation de frottis selon la revendication 2, comprenant en outre un second rail de guidage (32) disposé sur au moins une parmi l'unité inférieure (2) et l'unité supérieure (4) et au moins un second moyen de mise en prise (50) disposé sur l'autre de l'au moins une parmi l'unité inférieure (2) et l'unité supérieure (4), dans lequel le second rail de guidage (32) peut être mis en prise avec le second moyen de mise en prise (50) pour permettre à l'unité supérieure (4) d'être raccordée de manière amovible à l'unité inférieure (2).

4. Dispositif de préparation de frottis selon l'une quelconque des revendications 1 à 3, dans lequel les premier et second côtés (22, 24) s'étendent jusqu'à l'étendue d'une zone, dans la direction de la longueur, dans laquelle l'échantillon est étalé.

5. Dispositif de préparation de frottis selon l'une quelconque des revendications 2 à 4, dans lequel au moins un parmi le premier rail de guidage (30) et le second rail de guidage (32) est disposé sur l'unité supérieure (4) et au moins un parmi le premier moyen de mise en prise (52) et le second moyen de mise en prise (50) est disposé sur l'unité inférieure (4), respectivement.

6. Dispositif de préparation de frottis selon l'une quelconque des revendications 3 à 5, dans lequel les premier et second moyens de mise en prise (52, 50) comprennent une ou plusieurs portions de ressort (52, 50) qui sont agencées pour venir en prise avec au moins un parmi le premier et le second rail de guidage (30, 32), respectivement.

7. Dispositif de préparation de frottis selon l'une quelconque des revendications 3 à 6, dans lequel les premier et second moyens de mise en prise (52, 50), dans un état mis en prise exercent une force sur les premier et second rails de guidage (30, 32), respectivement.

8. Dispositif de préparation de frottis selon la revendication 7, dans lequel le premier moyen de mise en prise (52) est ajustable pour ajuster la force exercée sur le premier rail de guidage (30) pour commander la vitesse à laquelle l'unité inférieure (2) et l'unité supérieure (4) sont mobiles l'une par rapport à l'autre.

9. Dispositif de préparation de frottis selon l'une quelconque des revendications 1 à 8, dans lequel l'unité supérieure (4) et l'unité inférieure (2) peuvent pivoter l'une par rapport à l'autre jusqu'à une position ouverte dans laquelle une lamelle (6) peut être disposée et retirée de l'unité inférieure (2).

10. Dispositif de préparation de frottis selon l'une quelconque des revendications 1 à 9, dans lequel l'unité supérieure (4) et l'unité inférieure (2) peuvent pivoter l'une par rapport l'autre jusqu'à la position fermée dans laquelle le frottis peut être préparé en déplaçant la lame épandeuse (18) par rapport à la lamelle disposée sur l'unité inférieure (2).

11. Dispositif de préparation de frottis selon l'une quelconque des revendications 1 à 10, dans lequel l'unité inférieure (2) comprend une zone marquée (62, 64) donnant une indication à l'utilisateur du lieu où l'échantillon doit être disposé (62) et du volume de l'échantillon à disposer (64), dans lequel la zone marquée (62, 64) est visible pour l'utilisateur au travers de la lamelle (6) lorsque la lamelle (6) est disposée sur l'unité inférieure (2).
